# EUROPEAN PATENT APPLICATION

(11) **EP 4 796 907 A1**
(43) Date of publication of application: **26.08.2026**
(21) Application number: 26153184.2
(22) Date of filing: 21.01.2026
(51) Int. Cl.: G01K 11/32

(54) **CABLE TERMINATION WITH FIBER OPTIC TEMPERATURE SENSOR**

(30) Priority: 25.02.2025 IT 202500003666
(71) Applicant: Prysmian S.p.A., 20126 Milan (IT)
(72) Inventor: TESTA, Luigi, 20126 Milano (MI) (IT); LI VIGNI, Vincenzo, 20126 Milano (MI) (IT); RIZZO, Giuseppe, 20126 Milano (MI) (IT); POGLIANI, Stefano, 20126 Milano (MI) (IT)
(74) Representative: Praxi Intellectual Property Milano

(57) **Abstract**

The present disclosure relates to a cable termination (1) comprising:
- a base (4);
- a top part (9);
- a tubular insulator body (13) extending according to a longitudinal axis (A1) between the base (4) and the top part (9);
- a temperature sensor device (2) for measuring temperatures along the cable termination (1), comprising at least one optical fiber (12) wound around the tubular insulation body (13); and
- an electrically insulating outer sheath (5) covering the tubular insulator body (13) and the at least one optical fiber (12) wound thereon,
wherein the at least one optical fiber (12) comprises a helically wound first length (12'), extending from the base (4) to the top part (9), a helically wound second length (12"), extending from the top part (9) to the base (4), and a loop portion (12‴) near the top part (9), where the first length (12') joins the second length (12"), wherein the first length (12') and the second length (12") are parallelly arranged side by side spaced with an axial spacing (Δz), forming subsequent couples of coils axially spaced with an axial pitch (Δp).

## Description

### BACKGROUND

### Technical field

The present disclosure relates to the field of measuring temperatures in cable terminations, such as, for example, High Voltage (HV) and Medium Voltage (MV) terminations, in particular for detecting anomalies in the same.

### Description of the Related Art

Cable terminations may be affected by different issues, such as Partial Discharges on the stress cone or bad contact between different metal components, that may result in critical failure of the component, safety threats to people and objects and extended economic losses.

The detection of such faulty conditions can be based on measurement of temperature in the terminations as described for example in the European Patent Application n. 24191425.8 filed by the Applicant.

To this purpose, there is a need of measuring the temperature distribution along the termination in a non-invasive way. However, cable terminations are subjected to electrical potential, so a temperature detection based on sensors having electrically conductive parts, such as NTC (Negative-Temperature-Coefficient) thermistors, thermocouples, is unfeasible. Other techniques, such as thermal imaging, are performed outside the termination and, accordingly, can be affected by external disturbances.

Optical fibers can also be used as temperature sensors. However, monitoring of temperature distribution in cable terminations based on optical fibers requires the use of specific moulds for finalizing the cover around the termination insulator with a risk of damaging the integrated fiber optic sensor.

An example of monitoring of temperature distribution through optical fibres is given in US 11,133,624. Disclosed are embodiments of an electrical plug, in particular a medium voltage plug or a high voltage plug, for a power cable including at least one housing configured to receive at least one electrical plug module. The plug includes at least one fiber optic cable arranged in the housing as a temperature sensor of a temperature measuring arrangement.

Another example of temperature monitoring through thermocouples, suitable for power cable accessories, is given in CN 115940076, disclosing an intelligent GIS terminal with a built-in multi-point temperature monitoring function. Multi-point temperature detection is carried out on the terminal through a temperature sensing element arranged in an epoxy sleeve and a temperature monitoring device in signal connection with the temperature sensing element.

### BRIEF SUMMARY OF THE DISCLOSURE

The Applicant therefore aims at providing a cable termination provided with fiber optic temperature sensor which can be easily manufactured and with a reduced risk of damages of the optical fibres.

The Applicant has found that providing a cable termination with at least one optical fibre for the monitoring of temperature distribution, helically wound around the termination insulator in a specific way and forming a loop at the top of the insulator, reduces the risk of damages to the optical fiber. Additionally, the manufacturing process of the insulator does not require any modification on the moulds already in use for terminations which are not provided with the optical fibres, because the optical fibres are simply wound around the termination insulator and covered by the insulator outer sheath.

Accordingly, the present disclosure relates to a cable termination comprising:
- a base;
- a top part;
- a tubular insulator body extending according to a longitudinal axis between the base and the top part;
- a temperature sensor device for measuring temperatures along the cable termination, comprising at least one optical fiber wound around the tubular insulation body; and
- an electrically insulating outer sheath covering the tubular insulator body and the at least one optical fiber wound thereon,
wherein the at least one optical fiber comprises a helically wound first length, extending from the base to the top part, a helically wound second length, extending from the top part to the base, and a loop portion near the top part, where the first length joins the second length, wherein the first length and the second length are parallelly arranged side by side spaced with an axial spacing, forming subsequent couples of coils axially spaced with an axial pitch.

In an embodiment, the at least one optical fiber comprises a single optical fiber, said single optical fiber comprising the first length, the second length and the loop portion.

In another embodiment, the at least one optical fiber comprises a first optical fibre comprising the first length and a second optical fiber comprising the second length, wherein the first and the second optical fibers are spliced at the loop portion.

In an embodiment, the axial spacing between the first length and the second length of the at least one optical fiber is a constant value.

In an embodiment, the axial pitch between said subsequent couples of coils is constant along the longitudinal axis.

In another embodiment, the axial pitch between said subsequent couples of coils is variable along the longitudinal axis.

In an embodiment, the axial pitch between said subsequent couples of coils is lower near the base and/or near the top part.

In an embodiment, the at least one optical fiber is stuck to an outer surface of the tubular insulator body.

In an embodiment, the base comprises at least one hole for the passage of ends of the at least one optical fiber and for the connection of said optical fiber ends to an acquisition circuit external to the termination.

In an embodiment, the at least one hole extends at least partially parallel to an outer surface of the base and ends perpendicular to said outer surface.

In an embodiment, the at least one optical fiber is coated with a coating system and a protective sheath surrounds the optical fiber.

In an embodiment, the at least one optical fiber is tight buffered with a buffer layer between the coating system and the protective sheath.

In an embodiment, the protective sheath comprises a fibre-reinforced composite.

### BRIEF DESCRIPTION OF THE DRAWINGS

Further characteristics and advantages will be more apparent from the following description of the various embodiments given as a way of an example with reference to the enclosed drawings in which:
FIG. 1 shows an example of HV termination comprising a fiber optic temperature sensor according to an embodiment;
FIG. 2 schematically shows a detail of the HV termination of FIG. 1 showing an optical fiber wound around an insulator body of the cable termination;
FIG. 3 shows a detail of the HV termination of FIG. 1 showing a section of an optical fiber wound around the insulator body of the cable termination;
FIG. 4 schematically shows a detail of the base of the HV termination of FIG. 1 with a hole for the passage of the end of the optical fiber;
FIG. 5 schematically shows a perspective view of a temperature sensor device of the cable termination according to an embodiment.

### DETAILED DESCRIPTION

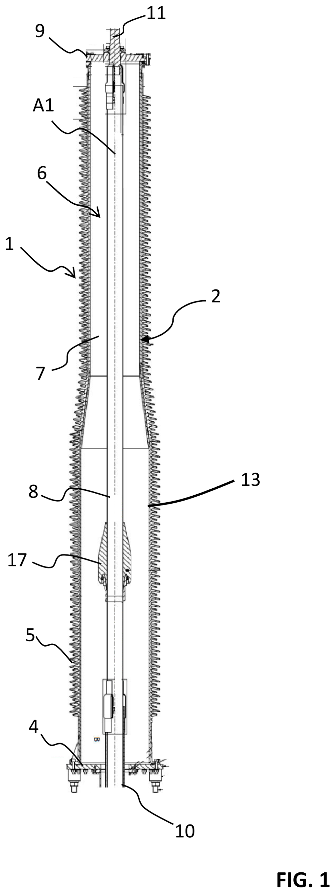

FIG. 1 schematically shows an example of a cable termination 1 according to the present disclosure. The cable termination can be a High Voltage (HV) termination or a Medium Voltage (MV) termination. The following description refers to a HV termination, but it is also appliable to terminations operating in corresponding voltage higher than 5 KV.

The HV termination 1 comprises a base 4 (including metallic parts), a tubular insulator body 13 (made e.g. of glass fiber and resin, or other insulating materials), extending according to a longitudinal axis A1 and defining an inner region 6. The inner region 6 includes a cooling/insulating fluid 7 and houses a HV connection cable 8. The termination 1 further comprises an electrically insulating outer sheath 5, which can be ribbed, externally covering and, preferably, directly contacting the tubular insulator body 13. The electrically insulating outer sheath 5 can be made, for example, of silicone rubber or of ethylene polymer rubber (EPR).

The HV termination 1 further comprises a top part 9 (including further metallic parts). The HV connection cable 8 extends into the inner region 6 along the longitudinal axis A1 and is configured to connect a portion of an external cable 10 (at the base 4) with a solid top connector 11, mounted at the top part 9. According to an example, a stress cone 17 is mounted on the HV connection cable 8.

The HV termination 1 can be of the type having a gaseous cooling/insulating fluid 7 (such as SF₆) or a liquid cooling/insulating fluid 7 (such as oil).

Considering the case in which the HV termination 1 is a liquid insulated termination, one or more of the following anomaly conditions may occur: bad bus-bar contact (resulting in abnormal hotspot at the top and possible damage for the electrical system to which the termination is connected); bad cable-to-termination interface (also resulting in hotspot at the bottom and likely damage for the electrical system); leakage of the cooling/insulating fluid.

Considering the case in which the HV termination 1 is a gas insulated termination, a bad bus-bar contact may result in a hotspot at the top or a bad cable-to-termination interface condition may result in a hotspot at the bottom. As known to the skilled person, the bad bus-bar contact condition refers to the situation in which the conductor of the connection cable 8 does not contact suitably the solid top connector 11 and therefore it is an anomaly that can occur in the top part 9 of the HV termination. The bad cable-to-termination interface condition can occur typically in plug-in type terminations, wherein the termination connector does not contact suitably the cable plug and therefore it is an anomaly that can occur in the bottom portion of the HV termination, near the base 4.

It is observed that in both cases of HV termination 1 insulated with liquid and gas, the temperature increases with the height evaluated along the longitudinal axis A1 from the base 4 towards the top part 9.

If the cooling/insulating fluid 7 is a liquid, the heat generated into the connection cable 8 is removed and transferred outside by means of natural or forced convection. This leads the fluid near the connection cable 8 to move towards the top of the of the HV termination 1. For the same reason, the part of the fluid near the outer sheath 5 of the termination moves downwards. This convective motion leads the axial temperature profile to increase monotonically with the height.

Regarding a cooling/insulating fluid 7 made by gas, the mass density of the cooling/insulating gas 7 decreases with the temperature. Therefore, when heat is generated within the connection cable 8 by the flowing current load, the gas stratifies and the axial temperature profile is monotonically increasing with the height.

The cable termination 1 comprises a temperature sensor device 2 arranged so as to measure temperatures along the termination height from the base 4 to the top part 9, wherein the height is valuated in a direction parallel to the longitudinal axis A1.

The temperature sensor device 2 comprises at least one optical fiber 12 (in particular: one or two optical fibres suitably arranged and configured, as will be described in more detail below) wound around the tubular insulation body 13.

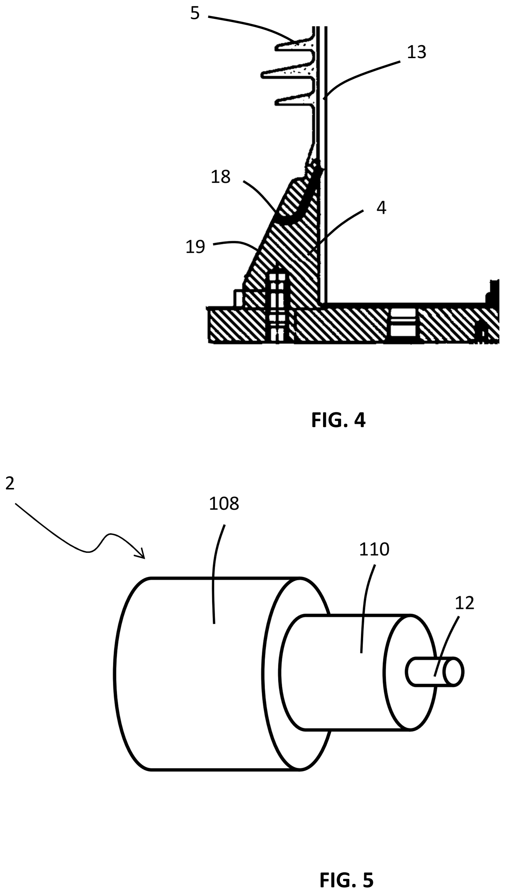

Figure 5 illustrates a partial perspective view of the temperature sensor device 2 according to an exemplary embodiment. The temperature sensor device 2 comprises the optical fiber 12, namely a silica-based optical fiber, with typical nominal diameter of 125 µm. In an embodiment, the optical fiber 12 is coated by a coating system. In particular, the coating system can comprise a primary coating, which in turn can be surrounded by a secondary coating, which adherently contacts the primary coating. The outer diameter of the (coated) optical fiber 12 can be 250+/-10 µm or 200+/-10 µm. Single-layer coating systems can be used as well. Preferably, the optical fiber 12 is a single-mode optical fiber, such as a transmission fiber compliant with G.652, G.653, or G.655 ITU-T (International Telecommunications Union, ITU Telecommunication Sector) recommendations. In an embodiment, the optical fiber 12 is a pure-silica core fiber.

The coated optical fiber 12 has enhanced bending performance, exhibiting low bending losses. In some embodiments, the coated optical fiber 12 is compliant to the G.657 ITU-T recommendations.

The coating system can be made of two different UV-cured acrylate material up to a diameter of 250 µm. In one embodiment, the coating system of the optical fiber is as disclosed in EP 1 497 686. In preferred embodiments, the optical fiber 12 is tight-buffered with a buffer layer 110 surrounding the coating system for improving mechanical protection of the optical fiber, e.g. against microbending losses.

For example, the buffer layer 110 is extruded or applied over the 250 µm-coated fiber, increasing the outside diameter up to 600-1000 µm, with typical values of 800-900 µm. Preferably, the buffer layer 110 is made of a material having elastic properties that permit the tight-buffered optical fiber to bear elongations and compressions of up to and including 2%.

Advantageously, the buffer layer 110 is selected so as to adhere to the coating system of the optical fiber 12 with essentially no creeping, slipping or debonding. Preferably, the buffer layer 110 is based on a thermal resistant material capable of exhibiting thermal resistance sufficient to withstand the temperatures in the termination.

Preferably, the buffer layer 110 is made of a radiation curable acrylate polymer. For example, the tight buffer is made of a UV-curable acrylate polymer such that described in WO 2005/035461, or of a polymeric matrix charged with a flame-retardant filler such that described in WO 2008/037291.

An adhesion-promoting layer can be provided between the optical fiber coating system and the tight buffer layer 110.

A protective sheath 108, designed to improve resistance to lateral compressions and to improve the tensile strength, can be provided to surround the optionally tight buffered optical fiber.

The material of the protective sheath 108 is selected so as to provide strong and relatively uniform adhesion with the optionally buffered optical fiber. In an embodiment, the protective sheath 108 is made of a fibre-reinforced composite, wherein the fibres can be carbon, graphite, boron, or glass (non-optical) fibres.

In an embodiment, the protective sheath 108 is a glass-reinforced polymer (GRP), in which the polymer is reinforced by glass fibres embedded in the polymer.

Optionally, the outer surface of the protective sheath 108 comprises a plurality of grooves or cuts or is treated to form a rough surface. Alternatively or in addition, an adhesion promoting layer can be optionally provided on the protective sheath 108.

In order to provide the temperature sensor device 2 with flexibility, the protective sheath 108 can be made of a polymeric-based material having elastic properties. Preferably, the polymer embedding the reinforcing fibres are cross-linked resins, in particular UV-curable cross-linked resins or thermosetting cross-linked resins, which in general provide for a resistance to compressions. The cross-linked resins can be unsaturated polyesters, epoxies, or vinyl esters.

The thickness of the protective sheath 108, when made of polymeric-based material, is preferably comprised between 500 and 1000 µm. For example, the protective sheath 108 is a GRP layer that increases the outer diameter of the buffered optical fiber up to 1.8-2.5 mm.

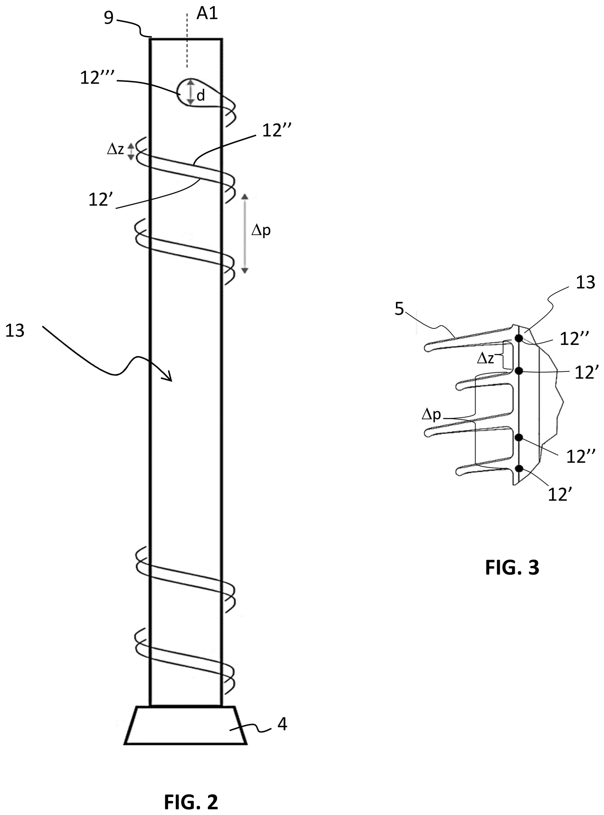

With reference to Figs. 2-3, the (optionally coated) optical fiber 12 is helically wound, so as to form coils, around the tubular insulator body 13. The wound optical fiber 12 comprises a first length 12' extending from the base 4 to the top part 9 of the termination and a second length 12" extending from the top part 9 to the base 4 of the termination. Furthermore, the optical fiber 12 comprises a loop portion 12‴ at the top part 9, where the first 12' length joins the second length 12" forming a loop. Both the first length 12' and the second length 12" are helically wound around the tubular insulator body 13 and are arranged side by side so to form parallel couples of coils (wherein in each couple one coil is of the first length 12' and the other coil is of the second length 12") separated by an axial spacing Δz. Preferably, the axial spacing Δz is a constant value, such as 2 mm. The loop portion 12‴ is such that the loop does not exceed the minimum bending radius of the optical fiber 12 to avoid breaking or damage of the same. In an embodiment, the maximum distance d between the first length 12' and the second length 12" at the loop portion 12‴ is at least 20 mm. The couples of coils, in turn, are separated by an axial pitch Δp.

In an embodiment, the temperature sensor device 2 comprises a single optical fiber 12. Accordingly, the first length 12', the second length 12" and the loop portion 12‴ belong to the same single optical fiber.

In another embodiment, the temperature sensor device 2 comprises a first and a second optical fibers, wherein the first optical fibre comprises the first length 12', the second optical fiber comprises the second length 12", and the first and second optical fibers are spliced at the loop portion 12‴.

The axial pitch Δp between subsequent couples of coils can be constant (uniform pitch) or variable (non-uniform pitch) along the longitudinal axis A1. In case of non-uniform pitch, preferably the axial pitch near the base 4 and/or near the top part 9 is lower than the axial pitch in the central portion between the base 4 and the top part 9 of the tubular insulator body 13. In this manner, it is possible to have a higher resolution at the termination ends while at the same time saving optical fibre length.

The single optical fiber or the first and second optical fibers can be stuck to the outer surface of the tubular insulator body 13 e.g. by glue.

Referring to Fig. 4, in an embodiment, the base 4 of the termination comprises at least one hole 18 for the passage of the ends of the optical fiber(s) 12 (opposite to the loop portion 12‴), which can be then connected to an acquisition circuit (not shown) for signal conditioning and conversion into digital data representative of temperature values along the optical fiber 12 and/or to an electromagnetic source (such as a LED) to transmit radiation into the optical fiber.

In an embodiment, the at least one hole 18 extends parallel to an outer surface 19 of the base 4 and ends substantially perpendicular to the same. In an embodiment, the outer surface 19 is inclined with respect to the longitudinal axis A1 and so is the hole 18.

In an embodiment, the at least one hole 18 exits near the bottom of the base 4 to avoid interference with the mold for the outer sheath 5 during manufacturing.

The outer sheath 5 that covers the tubular insulator body 13 can be thus moulded and applied onto the same without the need of any modification in the moulds due to the presence of the optical fibers 12.

## Claims

1. A cable termination (1) comprising:
- a base (4);
- a top part (9);
- a tubular insulator body (13) extending according to a longitudinal axis (A1) between the base (4) and the top part (9);
- a temperature sensor device (2) for measuring temperatures along the cable termination (1), comprising at least one optical fiber (12) wound around the tubular insulation body (13); and
- an electrically insulating outer sheath (5) covering the tubular insulator body (13) and the at least one optical fiber (12) wound thereon,
wherein the at least one optical fiber (12) comprises a helically wound first length (12'), extending from the base (4) to the top part (9), a helically wound second length (12"), extending from the top part (9) to the base (4), and a loop portion (12‴) near the top part (9), where the first length (12') joins the second length (12"), wherein the first length (12') and the second length (12") are parallelly arranged side by side spaced with an axial spacing (Δz), forming subsequent couples of coils axially spaced with an axial pitch (Δp).

2. The cable termination (1) of claim 1, wherein the at least one optical fiber (12) comprises a single optical fiber (12), said single optical fiber (12) comprising the first length (12'), the second length (12") and the loop portion (12‴).

3. The cable termination (1) of claim 1, wherein the at least one optical fiber (12) comprises a first optical fibre comprising the first length (12') and a second optical fiber comprising the second length (12"), wherein the first and the second optical fibers are spliced at the loop portion (12‴).

4. The cable termination (1) of claim 1, wherein the axial spacing (Δz) between the first length (12') and the second length (12") of the at least one optical fiber (12) is a constant value.

5. The cable termination (1) of claim 1, wherein the axial pitch (Δp) between said subsequent couples of coils is constant along the longitudinal axis (A1).

6. The cable termination (1) of claim 1, wherein the axial pitch (Δp) between said subsequent couples of coils is variable along the longitudinal axis (A1).

7. The cable termination (1) of claim 6, wherein the axial pitch (Δp) between said subsequent couples of coils is lower near the base (4) and/or near the top part (9).

8. The cable termination (1) of claim 1, wherein the at least one optical fiber (12) is stuck to an outer surface of the tubular insulator body (13).

9. The cable termination (1) of claim 1, wherein the base (4) comprises at least one hole (18) for the passage of ends of the at least one optical fiber (12) and for the connection of said optical fiber ends to an acquisition circuit external to the termination (1).

10. The cable termination (1) of claim 9, wherein the at least one hole (18) extends at least partially parallel to an outer surface (19) of the base (4) and ends perpendicular to said outer surface (19).

11. The cable termination (1) of claim 1, wherein the at least one optical fiber (12) is coated with a coating system and wherein a protective sheath (108) surrounds the optical fiber.

12. The cable termination (1) of claim 11, wherein the at least one optical fiber (12) is tight buffered with a buffer layer (110) between the coating system and the protective sheath (108).

13. The cable termination (1) of claim 11 or 12, wherein the protective sheath (108) comprises a fibre-reinforced composite.
